# EUROPEAN PATENT APPLICATION

(11) **EP 2 811 351 A2**
(43) Date of publication of application: **10.12.2014**
(21) Application number: 14170646.5
(22) Date of filing: 30.05.2014
(51) Int. Cl.: G05B 19/042

(54) **System and method for application development and deployment**

(30) Priority: 07.06.2013 US 201313913256
(71) Applicant: General Electric Company, Schenectady, New York 12345 (US)
(72) Inventor: Goli, Balajose, 500081 Hyderabad (IN); Bolla, Veera Paparao, 500081 Hyderabad (IN); Romanik, Christina Ann, Greenville, SC 29615 (US); Banerjee, Abhik, 500081 Hyderabad (IN); Ojha, Pradyumna, 500081 Hyderabad (IN); Fogla, Vishal, 500081 Hyderabad (IN); Liu, Yan, Greenville, SC 29615 (US); Mandava, Geetha, Greenville, SC 29615 (US)
(74) Representative: Illingworth-Law, William Illingworth

(57) **Abstract**

An industrial control system 10 is provided that includes an application module 16 with machine-readable instructions in a first format. The instructions specify inputs, outputs, processing, or any combination thereof, relating to a process of the industrial control system 10. The industrial control system 10 also includes a conversion server 19 with a processor that creates a platform-specific application by converting the application module 16 in the first format to a second format that is understandable by a common computing platform of the industrial control system 10.

## Description

The subject matter disclosed herein relates to systems and methods for the development and deployment of applications in an industrial environment.

Certain systems, such as industrial automation and/or control systems, may include capabilities that enable the control and monitoring of the system. For example, an industrial automation system may include controllers, field devices, and sensors that monitor data for subsequent analysis. The data captured by one or more of these industrial automation and/or control system components may be provided as inputs to one or more industrial automation and/or control system applications, which may be useful to analyze specific components of the industrial automation system, to monitor the health of the industrial automation system, to analyze plant performance, or provide other plant-related operational metrics. Additionally or alternatively, control system applications may make use of one or more logical algorithms that may or may not use data inputs.

In many circumstances, these industrial automation and/or control system applications are highly customized for a particular industrial automation and/or control system. Further, these applications may be developed and/or implemented by a number of different authors. Unfortunately, this may result in a lack of uniformity in application development, deployment, and/or management, which creates an added complexity in incorporating and/or managing applications of industrial automation and/or control systems. Accordingly, it would be beneficial to improve the development, deployment, and management of applications within an industrial control system.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, an industrial control system includes an application module, comprising machine-readable instructions in a first format. The instructions specify inputs, outputs, processing, or any combination thereof, relating to a process of the industrial control system. The system also includes a conversion server that has a processor that creates a platform-specific application. The platform-specific application is created by converting the application module in the first format to a second format that is understandable by a common computing platform of the industrial control system.

In a second embodiment, a method is provided that converts, via a computer processor, an application module with a first set of machine-readable instructions in a first format into a platform-specific application with a second set of machine-readable instructions in a second format. The second format is understandable by a common computing platform of an industrial control system.

In a third embodiment, a tangible, non-transitory, computer-readable medium stores a plurality of instructions executable by a processor of an electronic device. The instructions include instructions to receive compiled code and a list of inputs and outputs associated with the compiled code; instructions to convert the compiled code into a platform-specific application, wherein the platform-specific application comprises a format interpretable by a common computing platform of an industrial control system; and instruction to create an initial value properties file based at least in part upon the inputs and outputs associated with the compiled code, wherein the initial value properties file is configured to be used as an input for execution of the platform-specific application.

These and other features, aspects, and advantages of the present invention will become better understood when the following detailed description is read with reference to the accompanying drawings in which like characters represent like parts throughout the drawings, wherein:
FIG. 1 is a block diagram of an industrial automation and/or control system that utilizes an advanced plant application platform to enhance application development and deployment, in accordance with an embodiment;
FIG. 2 is flowchart illustrating a process of creating an application used in the advanced plant application platform of FIG. 1, in accordance with an embodiment;
FIG. 3 is flowchart illustrating a process of editing an application used in the advanced plant application platform of FIG. 1, in accordance with an embodiment;
FIG. 4 is a more detailed flowchart illustrating a process for generating and deploying a platform-specific application as set forth in FIGS. 2 and 3, in accordance with an embodiment;
FIG. 5 is an information flow diagram illustrating creating and deploying a platform-specific application as discussed in FIG. 4, in accordance with an embodiment; and
FIG. 6 is an information flow diagram illustrating displaying and/or managing platform-specific applications, in accordance with an embodiment.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

In certain embodiments described herein, the advanced plant application platform may be used in industrial automation and/or control systems, such as automated power generation systems (e.g., gas, steam, wind, or water turbines, heat recovery steam generators (HRSG), gasification systems, combustion systems, electrical power generators, or similar automated power generation systems) and automated manufacturing systems (e.g., chemical plants, oil refineries, or similar manufacturing system) to enable different individuals and/or organizations to develop uniform applications that may run in a predictable manner within the industrial automation and/or control system. By converting application modules provided by these individuals and/or organizations to a uniform platform-understandable application, applications may be deployed and/or controlled in a consistent manner.

Accordingly, the presently disclosed embodiments may create and deploy platform-specific applications based upon application modules supplied by a third-party developer (e.g., a developer that is not affiliated with the manufacturer of the advanced plant application platform). Because these third-party applications modules are converted into platform-specific applications, they may be deployed and controlled using common tools within the advanced plant application platform, creating increased uniformity in developing, hosting, and/or managing applications within the industrial automation and/or control system environment.

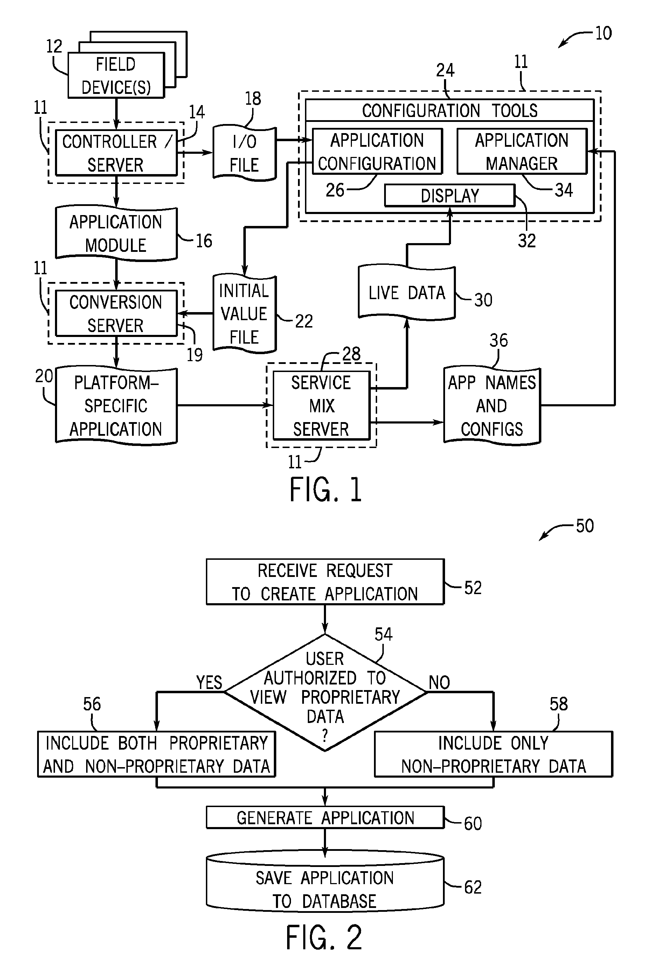

With the foregoing in mind, it may be useful to describe an automation and/or control system incorporating the techniques disclosed herein. Accordingly, FIG. 1 illustrates a system 10 as an example embodiment of an industrial automation and/or control system that incorporates the advanced plant application platform 11 techniques disclosed herein. As described herein, the advanced plant application platform 11 refers to computer-readable instructions stored and/or executed on one or more computer processors to perform the activities described herein. While the current embodiments illustrate these instructions executed on multiple computer processors, it should be understood that the provided examples are not intended to limit execution to separate computer processors. For example, each of the data processing steps described herein could be stored and/or executed from a single computer system.

As depicted, the system 10 may include one or more sensors and/or field devices 12 configured to monitor a plurality of parameters related to the operation and performance of the system 10. The sensors and field devices may include, for example, inlet sensors and field devices and outlet sensors and field devices positioned adjacent to, for example, the inlet and outlet portions of a component of the system 10, respectively. The sensors and field devices 12 may measure, for example, environmental conditions, such as ambient temperature and ambient pressure, as well as a plurality of engine parameters related to the operation and performance of a component of the system 10 (e.g., a turbine system), such as, for example, exhaust gas temperature, rotor speed, engine temperature, engine pressure, gas temperature, engine fuel flow, exhaust flow, vibration, clearance between rotating and stationary components, compressor discharge pressure, pollution (e.g., nitrogen oxides, sulfur oxides, carbon oxides and/or particulate count), and turbine exhaust pressure. Further, the sensors and field devices 12 may measure, for example, actuator information such as valve position, and a geometry position of variable geometry components (e.g., inlet guide vanes at an air inlet of a gas turbine engine). Measurements taken by the plurality of sensors and field devices 12 (i.e., operational parameters of the industrial automation and/or control system 10) may be transmitted to a controller and/or server 14 that is communicatively coupled to the sensors and field devices 12.

It should be appreciated that the sensors and field devices 12 may include any sensor and/or field device, including combustor 12 sensors, exhaust sensors, intake sensors, clearance sensors, and load sensors. Likewise, any type of field devices may be used, including "smart" field devices such as Fieldbus Foundation, Profibus, and/or Hart field devices. Further, the system 10 may be any industrial automation and/or control system application, including, for example, automated power generation systems, such as gas turbines, steam turbines, wind turbines, or hydroturbines, heat recovery steam generators (HRSG), a power generator, fuel skids, gas processing systems, or any other automated power generation system or partially-automated power generation system. Other industrial automation systems may include automated manufacturing systems such as chemical plants, pharmaceutical plants, oil refineries, automated production lines or similar automated or partially-automated manufacturing system.

The controller/server 14 may be a processor-based computer that includes machine-readable instructions that enable an operator to generate one or more applications for the field devices 12. The instructions may be stored on a tangible, non-transitory machine-readable medium. In some embodiments, the controller/server 14 may present a template to an operator that is useful for creating compiled code for the field devices 12. The template may enable the operator to specify particular inputs, outputs, and/or processing steps for the inputs and/or outputs of the system 10. Based upon the operator inputs to the template provided by the controller/server 14, a compiled application module 16 may be generated. Additionally, a file 18 containing the inputs and outputs related to the application module 16 may be provided. In one example, a developer may desire to design an application that predicts power output for a power plant over the next two days, and thus may design an application module 16 accordingly.

The application module 16 may be provided to a conversion system 19 (e.g., a computer workstation and/or server) that converts the compiled application module 16 into a platform-specific application 20. For example, in some embodiments, the compiled application module 16 (e.g., in the form of a dynamic-link library (DLL) or other dynamic linker) may be provided to the conversion system 19. Technology residing on the conversion system 19 (e.g., Java Native Interface (JNI) and/or Java Native Access bundle

(JNA) stored in a tangible, non-transitory, machine readable medium) may be used to provide an execution interface with the compiled application module 16. For example, these technologies may enable an Application Programming Interface (API) that provides interface functionalities such as, but not limited to: Initialization, Start, Stop, and Pause functionalities. The conversion system 19 may then produce the platform-specific application 20, which utilizes the API to execute functionalities defined in the compiled application module 16.

The platform-specific application 20 may be an application that is understandable by the system 10 (e.g., is understandable by the advanced plant application platform 11). For example, the application 20 may be Java archive (*.jar) file, operating system executable file (*.exe) file, etc. that is stored in a tangible, non-transitory, machine-readable medium. Additionally, as the application module 16 is converted, the file 18 may be provided to configuration tools 24. Specifically, the file 18 may be provided to an application configuration tool 26. The application configuration tool 26 may generate an initial value properties file 22, which defines the inputs and/or outputs related to the platform-specific application 20. The initial value properties file 22 may be provided to the conversion system 19, which may embed the proper initial values in the platform-specific application 20. As will be discussed in more detail below, the application configuration tool 26 may also store a reference to the application 16 or 20 and/or the initial values from the initial values file 22 in a data repository, such as a light-weight database, such that the platform 11 may be aware that the application 20 is deployed within the system 10.

As discussed above, the platform-specific application 20 is understandable by the platform 11. Accordingly, since the platform-specific application 20 is particularly designed for the platform 11, the platform 11 may execute the platform-specific application 20 to obtain and/or process live inputs and/or outputs from the field devices 12. For example, as will be discussed in more detail below, the platform 11 may deploy the platform-specific application 20 to a mix service 28 included in the platform 11. The service mix service 28 may include computer-readable instructions for executing the platform-specific application 20 to obtain and/or process live data 30. As will be discussed in more detail below, the service mix service 28 may provide the live data 30 to configuration tools 24 of the platform 11. For example, the configuration tools 24 may include a display tool 32 that is enabled to display live values of all mapped and/or configured variables of the applications 16 and/or 20 to an operator of the display tool 32. These values may be provided to the user in any format, but in some embodiments, a variable grid may be displayed by the display tool 32. Additionally, the configuration tools 24 may include application management tools 34. As will be discussed in more detail below, the application management tools 34 may be useful for viewing deployed applications 20, uninstalling applications 20, starting and/or stopping the execution of applications 20, and/or monitoring the health of applications 20, etc. The platform 11 may provide application identification information and/or configuration data 36 to the application management tools 34, enabling the management of the application 20.

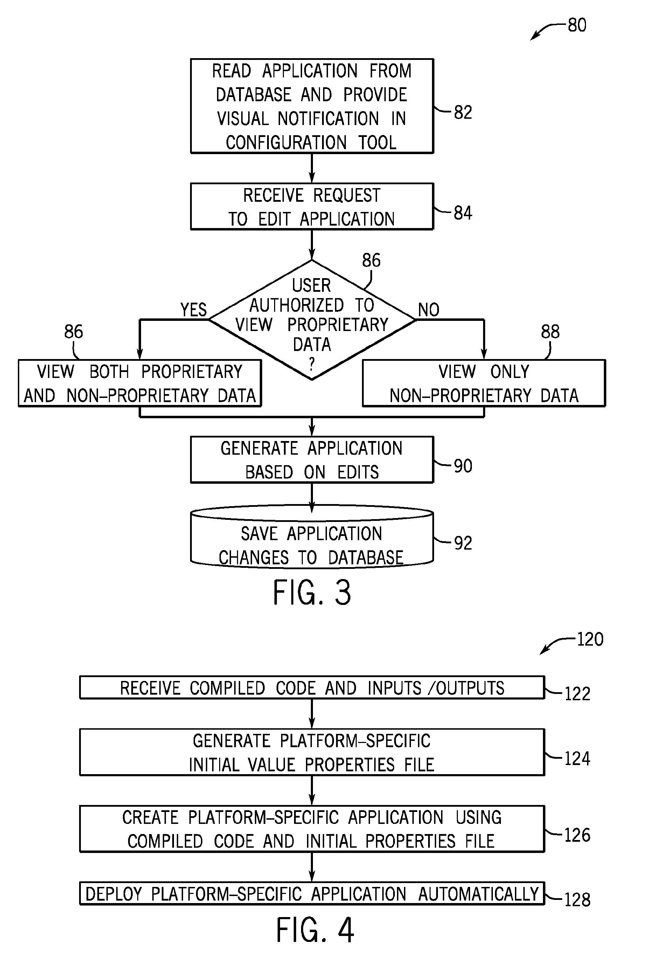

Having now provided an overview of the industrial automation and/or control system 10 with the platform 11, the discussion now turns to more detailed processes for creating and/or editing the applications 16. FIGS. 2 and 3 are provided to illustrate data security that may be implemented in the platform 11 regarding data utilized by the applications 16. Similar to the functionalities above, the following functionalities may be implemented as machine-readable instructions, stored in a tangible, non-transitory, machine-readable medium. FIG. 2 illustrates data access authorization during the creation of applications and FIG. 3 illustrates data access authorization during the modification of applications.

FIG. 2 is flowchart illustrating an embodiment of a process 50 for creating an application used in the advanced plant application platform of FIG. 1. First, a request is received to create an application (block 52). For example, the request could be received based upon user input from a computer. Next, user authorization is determined (decision block 54) based upon a user's credentials. For example, a particular user and/or entity (e.g., computer, server, etc.) may or may not be enabled to use proprietary data when creating and/or accessing an application within the industrial control and/or automation system 10 of FIG. 1. Proprietary data may be any data that a particular entity or organization wishes to keep secret from at least one person or group of people. For instance, in the example mentioned above regarding a power plant prediction application, certain constants used in the application may or may not be proprietary. For example, the prediction application may make use of a power output constant that provides energy conversion data for the application. If proprietary data access is allowed for the user, both proprietary and non-proprietary data (e.g., data that may be accessed by all users) may be included in the application inputs and/or outputs (block 56). If the user and/or entity is not allowed proprietary data access, only non-proprietary data is included in the application inputs and/or outputs (block 58). Based upon the data that is available (e.g., from block 56 or block 58), the application 16 of FIG. 1 is generated (block 60). The generated application 16 of FIG. 1 may be saved to a database or other storage (block 62). For example, an application name, inputs and/ or outputs, etc. may be saved to a light-weight database, which may provide a reference for the newly generated application 16.

After an application 16 is created (e.g., via the process 50 of FIG. 2), it may be useful to edit the application 16. FIG. 3 is flowchart illustrating an embodiment of a process 80 for editing an application 16 used in the advanced plant application platform of FIG. 1. Based upon a user request or other inputted request to edit an application 16 or 20, the application 16 or 20 is read from the data storage where the application 16 or 20 was stored in accordance with block 62 of FIG. 2 (block 82). As noted in block 82, a visual representation of configuration data for the application is provided via a configuration tool (e.g., display 32 of FIG. 1). Based upon a user input and/or any other type of input to the platform 11 of FIG. 1, a request to edit the application may be received (block 84). A security poll is conducted to determine whether or not the user and/or entity associated with the request is authorized to access proprietary data (decision block 86). If the user and/or entity is authorized, both proprietary data and non-proprietary data may be used in the input and/or output of the applications (block 88). If the user and/or entity is not authorized, only non-proprietary data is available for the input and/or output of the application 16 or 20 (block 88). The application 16 or 20 is edited based upon the user's and/or the entity's edit request (block 90) and the edited application is saved to the data storage (block 92).

In certain embodiments, the proprietary data may be stored differently than the non-proprietary data. For example, in some embodiments proprietary data may be stored in separate data storage from the non-proprietary data. Additionally, in some embodiments, because the access rights to the proprietary data may be limited, the proprietary data may be stored using encrypted data entries, thus limiting access to the proprietary data. In contrast, when no access restrictions exist for the non-proprietary data, the data may be stored as plain text entries in the data storage.

Having now discussed the potential security measures regarding proprietary data access, the discussion turns to a more detailed discussion of platform-specific application generation and deployment. FIG. 4 is a flowchart illustrating an embodiment of a computer-implemented process 120 for generating and deploying platform-specific applications (e.g., application 20 of FIG. 1). The advance plant application layer platform 11 may receive compiled code, inputs and/or outputs expected for the compiled code (block 122). For example, in some embodiments, an application template may be provided by the platform 11 to an application developer. The template may serve as a model of how an application 20 should be formed for the industrial automation and/or control system. For example, the template may be a standardized non-executable file that is used to define formatting of an application 20 for an application developer. The template may provide an input for the user to provide input and/or output parameters as well as processing instructions to be used in the application. The template may include particular pre-defined functions useful for implementation in the applications. For example, the template may contain a set of Application Programming Interfaces (APIs) which include functionalities such as, but are not limited to: Initialization, Start, Stop, and/or Pause. In some embodiments, the template may be provided by the controller/server 14 of FIG. 1. Based upon the populated template and/or other developmental activities of the application developer, the inputs and/or outputs of the application may become known. An input/output file (e.g., I/O file 18 of FIG. 1) may be created based upon the known inputs and/or outputs. The input/output file contains all of the inputs and outputs related to the application. The platform 11 may determine whether or not compiled code may be converted based upon the incorporation of the API functionalities. In certain embodiments, when the compiled code does not incorporate the API functionalities, no platform-specific application may be generated.

The I/O file may be used to create a platform-specific initial value properties file that includes the data parameters for the application. The initial value properties file is formatted such that it may be provided as an input for the platform-specific application (e.g., application 20) to facilitate the platform-specific application's execution.

Once the initial value properties file is generated, the resultant application module (e.g., application module 16) from the populated template may be used in conjunction with the initial value properties file to create the platform-specific application (block 126). For example, as discussed above, in some embodiments, the compiled application module (e.g., in the form of a dynamic-link library (DLL) or other dynamic linker) may be provided to the conversion system (e.g., conversion system 19). Technology residing on the conversion system (e.g., Java Native Interface (JNI) and/or Java Native Access(JNA)) may be used to provide an execution interface with the compiled application module 16. For example, these technologies may enable an Application Programming Interface (API) that provides interface functionalities such as, but not limited to: Initialization, Start, Stop, and Pause functionalities. The conversion system may then produce the platform-specific application, which utilizes the API to execute functionalities defined in the compiled application module.

The platform-specific application is an application that is understandable, executable, and/or controllable by the advanced plant application layer platform (e.g., platform 11 of FIG. 1). In some embodiments, the platform-specific application 20 may be an operating system executable (*.exe) file or a Java archive (*.jar) file.

Once created, the platform-specific application 20 is automatically deployed to the advanced plant application layer platform (e.g., to a host computer for the application 20) (block 128). For example, the application 20 may be provided to an execution server (e.g., the service mix server 28 of FIG. 1) where the application 20 may be interpreted, executed, and/or controlled. Additionally, as discussed above, a data store of the system may store referenced data of the applications. This data store may enable proper management of the application 20 through the platform, by enabling data access and/or manipulation through the data store.

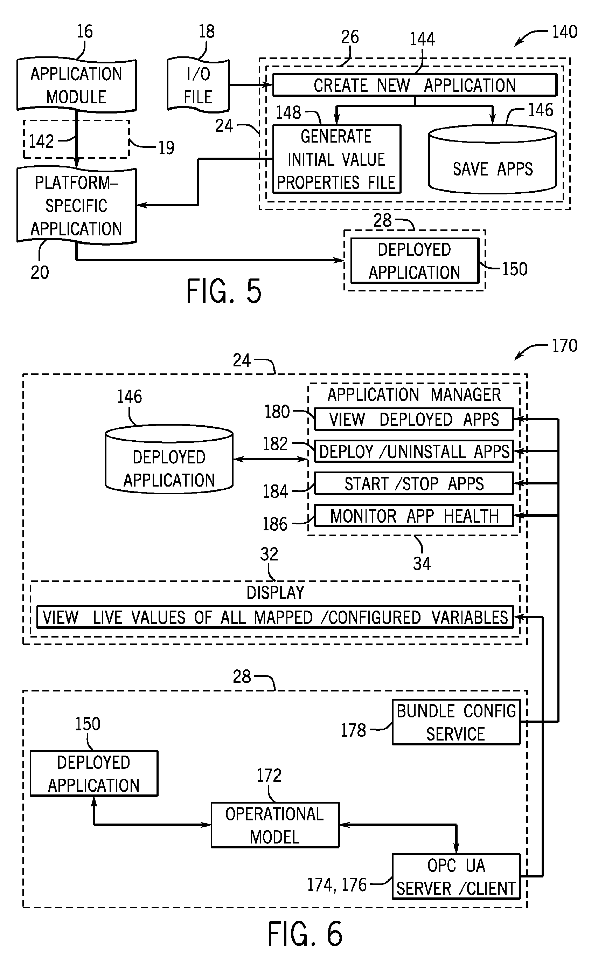

FIG. 5 illustrates an information flow diagram 140 for the process 120 of creating and deploying the platform-specific application as discussed in FIG. 4, in accordance with an embodiment. As discussed above, the application module 16 is converted 142 into a platform-specific application 20, for example, by computer-implemented instructions executed by a processor of a conversion server 19. In one embodiment, the conversion 142 may be accomplished by "wrapping" the application module 16 into an application 20 that is compatible with the platform. For example, a wrapper library may provide subroutines and/or classes that may be used to convert the application module 16 into the platform-specific application 20.

An input/output file 18 that details the inputs and outputs of the application module 16 is provided to the configuration tools 24. More specifically, the application configuration tool 26 interprets the file 18 to create a new application, as illustrated by functional block 144. Creating the new application includes saving the application to a data store 146 and generating the initial value properties file (e.g., file 22 of FIG. 1), as illustrated by functional block 148. In general, data store 146 may be any type of data repository. For example, the data store 146 may be a database or other type of data server. Additionally, in certain embodiments, the data store 146 may reside on the same processing device (e.g., computer, server, or similar processing or computing device) as one or more of the other platform components, such as the service mix server 28, the conversion server 11 of FIG. 1, and/or the configuration tools 24 server.

As discussed above, the initial value file may be provided as an input for the converted platform-specific application 20, which may facilitate the execution and/or management of the application 20. The data contained in the initial value properties file 22 may be embedded into the platform-specific application 20, and the platform-specific application 20 may be deployed 150. For example, the platform-specific application 20 may be deployed to the service mix server 20, where it may be executed and/or managed.

FIG. 6 is an information flow diagram 170 illustrating an embodiment of processes for displaying and/or managing platform-specific applications 20. As mentioned above, the service mix server 28 may enable the execution and/or management of deployed applications 150. While the deployed application 150 is running in the service mix server 28, an operational model 172 of the service mix server 28 may obtain live input and/or output values for the deployed application 150. For example, the industrial control system (e.g., system 10 of FIG. 1) may include one or more devices (e.g., devices 12 of FIG. 1) that may communicate with the service mix server 28 according to the Object Linking and Embedding (OLE) for Process Control (OPC) Unified Architecture (UA) protocol. OPC UA is a protocol for manufacturer-independent communication used in industrial automation and/or control systems 10 (e.g., automated power generation systems and automated manufacturing systems) that is specified by the OPC Foundation. For example, an industrial automation and/or control system 10 may include an OPC UA server 174 that may generally store information regarding the operational parameters of the industrial automation system 10. Additionally, the OPC UA server 174 may also make this information available, via a network connection, to one or more OPC clients 176. Because the service mix server 28 is enabled to receive live values as well as provide values from the deployed applications 150 to other components of the industrial automation and/or control system 10, the service mix server 28 may include both an OPC UA server 174 as well as an OPC client 176. Data from the OPC UA server 174 and/or OPC client 176 may be provided to the configuration tool 24. In particular, mapped and/or other live values that are specified for use by the deployed application 150 may be provided to the display tool 32, which may enable outputs of the application 20 to be viewed by a user (e.g., via a graphical-user-interface (GUI)). The data displayed by the display tool 32 may be useful, for example, to monitor, debug, and/or analyze processes within the industrial automation and/or control system.

The bundle configuration service 178 may include computer-readable instructions that, when executed, gather the names of all the deployed applications 150 and their configuration information (e.g., the inputs and/or outputs or other information stored in the data store 146). For example, the bundle configuration service 178 may obtain this information from the data store 146 or from information provided by the deployed application 150. This information may be provided to the application management tool 34, which may enable management of the deployed applications 150.

The application management tool 34 may provide many management functions for the deployed applications 150. For example, the application management tool 34 may include functionality 180 to view all of the deployed applications 150 in the advanced plant application layer platform 11. When a user accesses this functionality 180, the functionality may execute computer-readable instructions to obtain deployed application names, for example, from the data store 146. This functionality 180 enables a user to stay apprised of all of the deployed applications 150 within the advanced plant application layer platform.

Deployment and/or uninstall functionality 182 may also be provided in the application management tool 34. For example, from time to time, a user may desire to add new applications 20 to the platform 11 and/or remove an application 20 from the platform (e.g., to reduce space utilization and/or processing power utilization). The deployment and/or uninstall functionality 182 may include computer-readable instructions that, when executed, enable the addition and/or removal of deployed applications 150. For example, to add an application 20, a user may input values into the template mentioned in the discussion of FIG. 1. The deployment functionality 182 may ensure that the application configuration data (e.g., inputs and/or outputs and application name) are stored in the data store 146. Further, this functionality 182 may ensure that the platform-specific application (e.g., platform-specific application 20 of FIG. 5) is provided to the service mix server 28 for execution. Accordingly, the applications 20 may be deployed in a uniform manner, despite the applications 20 being provided by different developers.

The deployment and/or uninstall functionality 182 may also be used to uninstall deployed applications 150. For example, upon receiving a user request to uninstall a deployed application, the functionality 182 may remove the deployed application 150 from the service mix server 28 and/or remove any configuration or reference data relating to the deployed application 150 from the data store 146. By using the uninstall feature of the functionality 182, a user may remove applications 20 from the platform 11 with relative ease, regardless of uniformity in the application development.

In some embodiments, the application management tool 34 may include functionality 184 to start and/or stop deployed applications 150. For example, a user of the advanced plant application layer platform 11 may, from time to time, desire to start a stopped deployed application 150 or stop a currently running deployed application 150. This functionality 184 may be useful, for example, to more efficiently utilize resources (e.g., server memory) and/or for troubleshooting within the platform 11. Because each of the application modules (e.g., module 16 of FIG.1) is converted into a platform-specific application (e.g., application 20), the platform 11 is enabled to start and/or stop the deployed applications 150, using a common set of computer-readable instructions. Accordingly, despite any variations that different developers might introduce into the applications modules 16, the platform 11 may control the execution status (e.g., the start and/or stop of execution) in a uniform manner.

Further, because the application modules 16 are converted into platform-specific applications 20, the platform 11 is able to understand the inputs and/or outputs of the application. Accordingly, regardless of how the application module 16 was originally developed, the platform 11 may use functionality 186 to monitor the health of the applications. For example, the functionality 186 may monitor the input and/or output data of the platform-specific applications 20 to look for data that exceeds a particular range or threshold value. This may indicate poor health of the application 20. Despite development by non-uniform developers, the functionality 186 may enable a user to understand any anomalies regarding the applications 20, which may lead to an improved implementation within the industrial automation and/or control system.

Technical effects of the disclosed embodiments include enabling uniform creation, deployment, and management of industrial automation and/or control system applications, by converting third party application into applications understandable by a common platform of the industrial control and/or processing system.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An industrial control system, comprising:
   an application module, comprising machine-readable instructions in a first format, the instructions specifying inputs, outputs, processing, or any combination thereof, relating to a process of the industrial control system; and
   a conversion server, comprising a processor configured to create a platform-specific application, by converting the application module in the first format to a second format that is understandable by a common computing platform of the industrial control system.
2. The industrial control system of clause 1, comprising:
   a processor configured to generate the application module using one or more templates provided in the industrial control system.
3. The industrial control system of any preceding clause, wherein the platform is configured to automatically deploy the platform-specific application to a computer after the conversion server creates the platform-specific application.
4. The industrial control system of any preceding clause, comprising the computer, wherein the computer is configured to execute the deployed platform-specific application.
5. The industrial control system of any preceding clause, wherein the conversion server is configured to convert the application module by wrapping the application module into the second format.
6. The industrial control system of any preceding clause, comprising an application management tool that is configured to present a listing of all deployed applications in the common computing platform.
7. The industrial control system of any preceding clause, comprising an application management tool that is configured to uninstall the platform-specific application upon receiving an uninstall request, deploy the platform-specific application upon receiving a deployment request, or both.
8. The industrial control system of any preceding clause, comprising an application management tool that is configured to start the platform-specific application upon receiving a start request, stop the platform-specific application upon receiving a stop request, or both.
9. The industrial control system of any preceding clause, comprising an application management tool that is configured to monitor health of the platform-specific application by monitoring whether live data associated with the platform-specific application is in accordance with a value range, a value threshold, or both.
10. The industrial control system of any preceding clause, comprising a bundle configuration service that is configured to:
   gather configuration data of any deployed platform-specific applications and platform-specific application names for the deployed platform-specific applications; and
   provide the configuration data and platform-specific application names to application management tools that are configured to manage one or more aspects of the deployed platform-specific application based at least in part upon the configuration data, the platform-specific application names, or both.
11. The industrial control system of any preceding clause, comprising a display tool configured to:
   receive live data values associated with the platform-specific application over an Object Linking and Embedding (OLE) for Process Control (OPC) Unified Architecture (UA) protocol; and
   display the live data values in a graphical user interface.
12. A method comprising:
   converting, via a computer processor, an application module comprising a first set of machine-readable instructions in a first format into a platform-specific application comprising a second set of machine-readable instructions in a second format; wherein the second format is understandable by a common computing platform of an industrial control system.
13. The method of any preceding clause, wherein converting the application module into the platform-specific application comprises wrapping the first set of machine-readable instructions in the first format into the second set of machine-readable instructions in the second format.
14. The method of any preceding clause, comprising:
   receiving a request to create the application module;
   determining access rights to access proprietary data; and
   allowing the creation of the application module with only non-proprietary data when there is no access right to proprietary data; or
   allowing the creation of the application module with both proprietary data and non-proprietary data when there is an access right to proprietary data.
15. The method of any preceding clause, comprising:
   receiving a request to edit the application module;
   determining access rights to access proprietary data; and
   allowing the modification of the application module with only non-proprietary data when there is no access right to proprietary data; or
   allowing the modification of the application module with both proprietary data and non-proprietary data when there is an access right to proprietary data.
16. The method of any preceding clause, comprising:
   automatically deploying the platform-specific application to a host computer after converting the application module into the platform-specific application; and
   executing the deployed platform-specific application on the host computer.
17. A tangible, non-transitory, computer-readable medium storing a plurality of instructions executable by a processor of an electronic device, the instructions comprising:
   instructions to receive compiled code and a list of inputs and outputs associated with the compiled code;
   instructions to convert the compiled code into a platform-specific application, wherein the platform-specific application comprises a format interpretable by a common computing platform of an industrial control system; and
   instructions to create an initial value properties file based at least in part upon the inputs and outputs associated with the compiled code, wherein the initial value properties file is configured to be used as an input for execution of the platform-specific application.
18. The tangible, non-transitory, computer-readable medium of any preceding clause, comprising instructions to deploy the platform-specific application automatically after converting the compiled code.
19. The tangible, non-transitory, computer-readable medium of any preceding clause, comprising instructions to save the platform-specific application, configuration settings of the platform-specific application, or both, in a data store.
20. The tangible, non-transitory, computer-readable medium of any preceding clause, comprising instructions to manage the platform-specific application by accessing, modifying, or accessing and modifying, the platform-specific application, the configuration settings, or both, from the data store.

## Claims

1. An industrial control system (10), comprising:
an application module (16), comprising machine-readable instructions in a first format, the instructions specifying inputs, outputs, processing, or any combination thereof, relating to a process of the industrial control system (10); and
a conversion server (19), comprising a processor configured to create a platform-specific application (20), by converting the application module (16) in the first format to a second format that is understandable by a common computing platform of the industrial control system (10).

2. The industrial control system of claim 1, comprising:
a processor configured to generate the application module (16) using one or more templates provided in the industrial control system (10).

3. The industrial control system of claim 1 or claim 2, wherein the platform is configured to automatically deploy the platform-specific application (20) to a computer after the conversion server creates the platform-specific application (20), and, preferably, comprising the computer, wherein the computer is configured to execute the deployed platform-specific application (20).

4. The industrial control system of any preceding claim, wherein the conversion server (19) is configured to convert the application module (16) by wrapping the application module (16) into the second format.

5. The industrial control system of any preceding claim, comprising an application management tool (24) that is configured to perform at least one of:
present a listing of all deployed applications (20) in the common computing platform;
uninstall the platform-specific application (20) upon receiving an uninstall request, deploy the platform-specific application (20) upon receiving a deployment request, or both;
start the platform-specific application (20) upon receiving a start request, stop the platform-specific application (20) upon receiving a stop request, or both, and
monitor health of the platform-specific application (20) by monitoring whether live data associated with the platform-specific application (20) is in accordance with a value range, a value threshold, or both.

6. The industrial control system of any preceding claim, comprising a bundle configuration service (178) that is configured to:
gather configuration data of any deployed platform-specific applications (20) and platform-specific application names for the deployed platform-specific applications; and
provide the configuration data and platform-specific application names to application management tools (24) that are configured to manage one or more aspects of the deployed platform-specific application (20) based at least in part upon the configuration data, the platform-specific application names, or both.

7. The industrial control system of any preceding claim, comprising a display tool (32) configured to:
receive live data values associated with the platform-specific application (20) over an Object Linking and Embedding (OLE) for Process Control (OPC) Unified Architecture (UA) protocol; and
display the live data values in a graphical user interface.

8. A method comprising:
converting, via a computer processor, an application module comprising a first set of machine-readable instructions in a first format into a platform-specific application comprising a second set of machine-readable instructions in a second format; wherein the second format is understandable by a common computing platform of an industrial control system.

9. The method of claim 8, wherein converting the application module into the platform-specific application comprises wrapping the first set of machine-readable instructions in the first format into the second set of machine-readable instructions in the second format.

10. The method of claim 8 or claim 9, comprising:
receiving (52) a request to create the application module;
determining (54) access rights to access proprietary data; and
allowing (58) the creation of the application module with only non-proprietary data when there is no access right to proprietary data; or
allowing (46) the creation of the application module with both proprietary data and non-proprietary data when there is an access right to proprietary data.

11. The method of claim 8, 9 or 10, comprising:
receiving (84) a request to edit the application module;
determining (86) access rights to access proprietary data; and
allowing (88) the modification of the application module with only non-proprietary data when there is no access right to proprietary data; or
allowing (86) the modification of the application module with both proprietary data and non-proprietary data when there is an access right to proprietary data.

12. The method of any one of claims 8 to 11, comprising:
automatically deploying (128) the platform-specific application to a host computer after converting the application module into the platform-specific application; and
executing the deployed platform-specific application on the host computer.

13. A tangible, non-transitory, computer-readable medium storing a plurality of instructions executable by a processor of an electronic device, the instructions comprising:
instructions to receive compiled code and a list of inputs and outputs associated with the compiled code;
instructions to convert the compiled code into a platform-specific application, wherein the platform-specific application comprises a format interpretable by a common computing platform of an industrial control system; and
instructions to create an initial value properties file based at least in part upon the inputs and outputs associated with the compiled code, wherein the initial value properties file is configured to be used as an input for execution of the platform-specific application.

14. The tangible, non-transitory, computer-readable medium of claim 13, comprising at least one of:
instructions to deploy the platform-specific application automatically after converting the compiled code;
instructions to save the platform-specific application, configuration settings of the platform-specific application, or both, in a data store, and
instructions to manage the platform-specific application by accessing, modifying, or accessing and modifying, the platform-specific application, the configuration settings, or both, from the data store.
